# EUROPÄISCHE PATENTSCHRIFT

(11) **EP 2 217 875 B1**
(45) Veröffentlichungstag und Bekanntmachung des Hinweises auf die Patenterteilung: **16.08.2017**
(21) Anmeldenummer: 08848611.3
(22) Anmeldetag: 28.10.2008
(51) Int. Cl.: F28D 20/00, F24J 2/42, F28D 20/02, F28F 27/00

(54) **BRAUVERFAHREN UND BRAUEREIANLAGEN**
BREWING PROCESS AND BREWERY APPLIANCE
PROCEDE DE BRASSAGE ET BRASSERIE

(30) Priorität: 13.11.2007 DE 102007054429
(43) Veröffentlichungstag der Anmeldung: 18.08.2010
(73) Patentinhaber: Krones AG, 93073 Neutraubling (DE)
(72) Erfinder: Wasmuht, Klaus, 91792 Ellingen (DE); Folz, Cornelia, 13353 Berlin (DE)
(74) Vertreter: Grünecker Patent- und Rechtsanwälte PartG mbB
(86) Internationale Anmeldenummer: PCT/EP2008/009102
(87) Internationale Veröffentlichungsnummer: WO 2009/062597

(56) Entgegenhaltungen:
- WO-A1-2006/100062
- DE-A1- 19 731 351
- DE-A1- 19 846 364
- DE-A1- 19 852 057
- DE-A1- 19 953 493
- DE-A1-102005 013 314
- DE-C1- 10 025 318

## Beschreibung

Die vorliegende Erfindung betrifft ein Brauverfahren gemäß dem Oberbegriff von Anspruch 1 und eine Brauereianlage gemäß dem Oberbegriff von Anspruch 8.

Die beim beispielsweise Bierbrauen anfallenden Energiekosten machen einen bedeutenden Anteil der Gesamtherstellungskosten von Bier aus. Da der Anteil der Energiekosten mit der Verknappung fossiler Brennstoffe und den damit verbundenen höheren Energiepreisen wahrscheinlich noch zunehmen wird, wurde mit der WO 2006/100062 A1 der Anmelderin ein Brauverfahren und eine Brauereianlage gemäß dem Oberbegriff von jeweils Anspruch 1 und Anspruch 8 vorgeschlagen.

Dieser gattungsbildende Stand der Technik offenbart eine Brauereianlage, die eine Solaranlage umfasst, um die Brauerei vom Bedarf an fossilen Brennstoffen unabhängiger zu machen. Der gattungsbildende Stand der Technik schlägt vor, anhand von Solarkollektoren, die die Energie der Sonnenstrahlen in Wärmeenergie umwandeln, wenigstens einen Teil des Wärmeenergiebedarfs von Wärmeverbrauchern der Brauereianlage mit Hilfe von Energie zu decken, die nicht aus fossilen Brennstoffen stammt.

Hierzu werden die Sonnenkollektoren derart ausgelegt, dass das für den Brauprozess benötigte wärmste Fluid durch die Solarenergie auf eine Temperatur von mindestens 120°C aufgeheizt werden kann. Die durch die Sonnenkollektoren erzeugte Wärmeenergie wird beispielsweise in einem ein Fluid aufnehmenden Hochdruck-Schichtenspeicher zwischengespeichert. Aus dem oberen Bereich des Wärmespeichers wird das erhitzte Fluid über eine Leitung an unterschiedliche Wärmeverbraucher geleitet, an die über Wärmetauscher Wärme abgegeben wird. Nach Abgabe der Wärme weist das Fluid eine Resttemperatur auf und wird über eine Rückführleitung zurück zu dem Wärmespeicher geführt.

Um den Wirkungsgrad des Wärmespeichers zu erhöhen, und demzufolge der gesamten Brauereianlage, sind aus dem Stand der Technik Schichtenspeicher bekannt, in welchen sich unterschiedliche Temperaturzonen bilden. Das zurückgeführte Fluid wird in die Temperaturzone geleitet, in der die Temperatur des in dieser Temperaturzone des Schichtenspeichers befindlichen Fluids in etwa derjenigen des zurückgeführten Fluids entspricht. Hierzu schlägt beispielsweise die DE 197 31 351 A1 vor, ein Steigrohr in dem Schichtenspeicher anzuordnen, das sich entlang der Längsachse des Schichtenspeichers erstreckt. Das Steigrohr weist mehrere in Längsrichtung voneinander beabstandete Öffnungen auf, durch welche das zurückgeführte Fluid in unterschiedliche Temperaturzonen des Schichtenspeichers einströmen kann.

Aus der DE 100 25 318 C1 ist ein weiterer Schichtenspeicher bekannt. Dieser bekannte Schichtenspeicher weist ein gekrümmtes Verteilerrohr im unteren Bereich davon, welches mit mehreren Steigrohren gekoppelt ist. Das zurückgeführte Fluid kann entweder über eine Öffnung des gekrümmten Verteilerrohres in den Schichtenspeicher eingeführt werden, oder über die mit dem gekrümmten Verteilerrohr verbundenen Steigrohre.

Bei den aus der DE 197 31 351 A1 und der DE 100 25 318 C1 bekannten Schichtenspeichern kann es jedoch zur Durchmischung von unterschiedlichen Temperatur aufweisenden Fluiden innerhalb des Schichtenspeichers kommen, was eine Reduzierung des Wirkungsgrades des Schichtenspeichers und demzufolge eines gesamten Brauprozesses zur Fogle hat.

Ausgehend von der WO 2006/100062 A1 ist es eine Aufgabe der vorliegenden Erfindung, ein Brauverfahren und eine Brauereianlage mit verbessertem Wirkungsgrad bereitzustellen.

Die obige Aufgabe wird durch ein Brauverfahren mit den Merkmalen von Anspruch 1 gelöst.

Bei dem Brauverfahren gemäß Anspruch 1 wird nach Abgabe von Wärme an einen Wärmeverbraucher die Resttemperatur des Fluids erfasst. Abhängig von der erfassten Resttemperatur wird dann die Rückführung des Fluids in den Wärmespeicher gesteuert. Bei dem erfindungsgemäßen Verfahren erfolgt danach die Rückführung des eine Resttemperatur aufweisenden Fluids abhängig von der erfassten Resttemperatur. Das die Resttemperatur aufweisende Fluid kann einem weiteren Wärmeverbraucher zugeführt werden. Es kann aber auch der erneuten Erwärmung zugeführt werden. Die Entscheidung wird abhängig von der erfassten Resttemperatur gefällt, in der Regel von einem das Wärmemanagement der Brauereianlage steuernden Computer.

Bei dem erfindungsgemäßen Verfahren wird danach nicht mehr rein statisch das die Resttemperatur aufweisende Fluid zur Erwärmung bzw. Speicherung in einem Schichtenspeicher zurückgeführt. Vielmehr wird jeweils abhängig von der tatsächlich erfassten Resttemperatur, d.h. dem erfolgten Wärmeabzug aus dem Fluid entschieden, welchen weiteren Weg das von dem Wärmeverbraucher strömende Fluid zu gehen hat. Die entsprechende Entscheidung wird von dem Zentralcomputer energieoptimierend durchgeführt. Dadurch ist es möglich, noch nutzbare Restwärme an einen zweiten oder weiteren Verbraucher abzuführen. Des Weiteren wird das Fluid vorzugsweise lediglich mit einer solchen Temperatur der Wiedererwärmung zugeführt, die zu einem relativ hohen Wirkungsgrad bei der Wiedererwärmung in der Therme führt. Diese Therme kann beispielsweise eine Solaranlage sein.

Die Steuerung des Fluids abhängig von seiner Resttemperatur führt dementsprechend zu einem Brauverfahren mit verbessertem Wirkungsgrad.

Außerdem wird abhängig von der erfassten Resttemperatur des aus einem Wärmeverbraucher ausströmenden Fluids dieses wenigstens einem weiteren Wärmeverbraucher und/oder dem Wärmespeicher zugeführt. Hierdurch kann das eine Resttemperatur aufweisende Fluid Wärme an einen oder mehreren weiteren Wärmeverbrauchern abgeben, bevor es in den Wärmespeicher zurückgeführt wird. Dies bringt den Vorteil mit sich, dass das Fluid nach Abgabe von Wärme an einen ersten Wärmeverbraucher zur weiteren Abgabe von Wärme verwendet wird, wodurch das Fluid letztendlich in den Wärmespeicher mit einer möglichst geringen Temperatur eingeführt werden kann. Hierdurch wird die Wärmeabgabe des Fluids an die Wärmeverbraucher optimiert, wodurch der Wirkungsgrad des Brauprozesses verbessert werden kann.

Gemäß einer Weiterbildung nach Anspruch 2 wird das Fluid, abhängig von der Resttemperatur, in einen vorbestimmten Bereich des Wärmespeichers eingespeist. Gemäß dieser bevorzugten Ausführungsform wird demzufolge bereits vor der Einströmung des Fluids in den Wärmespeicher erfasst, welcher Bereich des Wärmespeichers eine Temperaturzone definiert, die unter Berücksichtigung der Resttemperatur des zurückgeführten Fluids für dieses geeignet ist. Das Fluid wird demnach gemäß dieser bevorzugten Ausführungsform nicht zuerst in den Wärmespeicher eingeleitet und innerhalb des Wärmespeichers in die geeignete Temperaturzone geführt, sondern vorab zu einem vorbestimmten Bereich des Wärmespeichers zugeführt, so dass das Fluid unmittelbar, d.h. ohne innerhalb des Wärmespeichers umgeleitet zu werden, in die geeignete Temperaturzone eingespeist wird. Hierdurch wird eine Durchmischung der unterschiedlichen Temperaturzonen des Wärmespeichers wirksam verhindert.

Sofern die Resttemperatur des Fluids für die Abgabe von Wärme an einen weiteren Sekundärkreislauf nicht geeignet ist, kann das Fluid mit einem eine Ausgangstemperatur aufweisenden Fluid, d.h. einem Fluid, welches nach Ausströmen aus dem Wärmespeicher noch keine Wärme abgegeben hat, gemäß den Weiterbildungen nach den Ansprüchen 5 und 6 vermischt werden. Somit kann das eine Resttemperatur aufweisende Fluid mehrmals von dem Primärkreislauf zu unterschiedlichen Sekundärkreisläufen abgezweigt werden, die üblicherweise in Bezug auf das Fluid als Parallelschaltung relativ zueinander vorgesehen sind, bis es eine Resttemperatur aufweist, die für die Abgabe von Wärme an weiteren Sekundärkreisläufen, sogar unter Beimischung von Fluid mit einer Ausgangstemperatur nicht mehr geeignet ist. Das Fluid wird demnach optimal genutzt und solange jedenfalls in einen Teilstrom unterschiedlichen in einer Reihenschaltung angeordneten Wärmeverbrauchern zugeführt, bis das Fluid die für die Wiedererwärmung und/oder die Rückführung in den Wärmespeicher geeignete Temperatur hat.

Gemäß einer weiteren bevorzugten Ausgestaltung wird das Mischungsverhältnis der stromaufwärts eines weiteren Wärmeverbrauchers, der von einem strömungsmäßig vorgelagerten Wärmetauscher abgehendes Fluid erhält, temperaturgesteuert eingestellt. Ausgangspunkt einer solchen Temperatursteuerung kann die Eintrittstemperatur sein, welche das aus beiden Teilströmen gemischte Fluid beim Eintritt in den weiteren Wärmeverbraucher haben soll. Durch Erfassen der Temperaturen der einzelnen Teilströme und Anpassen der Anteile beider Teilströme an der Gesamtströmung der Mischung lässt sich die gewünschte Eintrittstemperatur steuern. Auch hierbei werden die Signale der Temperatursensoren und die Stellung entsprechender Mischventile vorzugsweise automatisiert von einem Zentralrechner verarbeitet und/oder gesteuert. Dabei wird die Ausgangstemperatur vorzugsweise unmittelbar stromaufwärts der Mündung des die Resttemperatur aufweisenden Fluids bestimmt, um auch die Temperatur des wärmeren Anteils der zu mischenden Strömung exakt zu bestimmen.

Bei dem erfindungsgemäßen Verfahren kann bereits eine Steigerung der energetischen Wirksamkeit dadurch erreicht werden, dass das in dem primären Kreislauf zirkulierende Fluid mit fossilen Brennstoffen erwärmt wird. Allerdings ist es zu bevorzugen, das Fluid ganz oder teilweise mittels Sonnenenergie aufzuheizen.

Mit einer Anlage gemäß Anspruch 8 wird das der Erfindung zugrunde liegende vorrichtungsgemäße Problem gelöst. Erfindungsgemäß ist wenigstens ein Temperatursensor stromabwärts von jedem Wärmeverbraucher vorgesehen. Der Temperatursensor ist beispielsweise stromabwärts des Wärmeverbrauchers in dem Primärkreislauf ausgebildet.

Da die Strömungs-Regelungseinheit mit den Temperatursensoren gekoppelt ist, kann die Fluidströmung abhängig von der erfassten Resttemperatur gesteuert werden. Demnach ist das die Resttemperatur aufweisende Fluid derart durch die Brauereianlage durchströmbar, dass es mit einer möglichst geringen Temperatur in den Wärmespeicher zurückgeführt wird.

Bevorzugte Weiterbildungen der erfindungsgemäßen Brauereianlage sind in den Ansprüchen 9 bis 15 angegeben.

Zur Verbesserung der energetischen Wirksamkeit können die Einlassöffnungen des Wärmespeichers sind beispielsweise in Längsrichtung des Wärmespeichers, beabstandet voneinander ausgebildet sein. Beispielsweise ist eine Einlassöffnung zu einer bestimmten Zone des Wärmespeichers zugeordnet, wodurch das in den Wärmespeicher zurückströmende Fluid abhängig von der erfassten Resttemperatur durch eine der Einlassöffnungen in den Wärmespeicher eingeströmt wird. Durch Ausbilden der Einlassöffnungen an dem Wärmespeicher kann das Fluid außerhalb des Wärmespeichers einer geeigneten Temperaturzone zugeführt werden. Eine Umleitung des Fluids innerhalb des Wärmespeichers ist gemäß dieser bevorzugten Ausführungsform nicht erforderlich. Hierdurch wird eine erhebliche Durchmischung der unterschiedlichen Temperaturzonen innerhalb des Wärmespeichers wirksam verhindert.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser zeigen:
- Fig. 1: eine schematische Darstellung von Anlageteilen einer Brauereianlage gemäß einer bevorzugten Ausführungsform der vorliegenden Erfindung; und
- Fig. 2: die Temperaturzustände in der Ausführungsform nach Fig. 1.

Die nachfolgend in Bezug auf die Zeichnungen beschriebene Ausführungsform zeigt lediglich einen Teil einer Brauereianlage und eines Brauereiverfahrens. Andere Einzelheiten, die hier nicht näher beschrieben sind, entsprechen im Wesentlichen den in der WO 2006/100062 A1 beschriebenen, welche in Kombination mit der nachfolgenden bevorzugten Ausführungsform der vorliegenden Erfindung benutzt werden können.

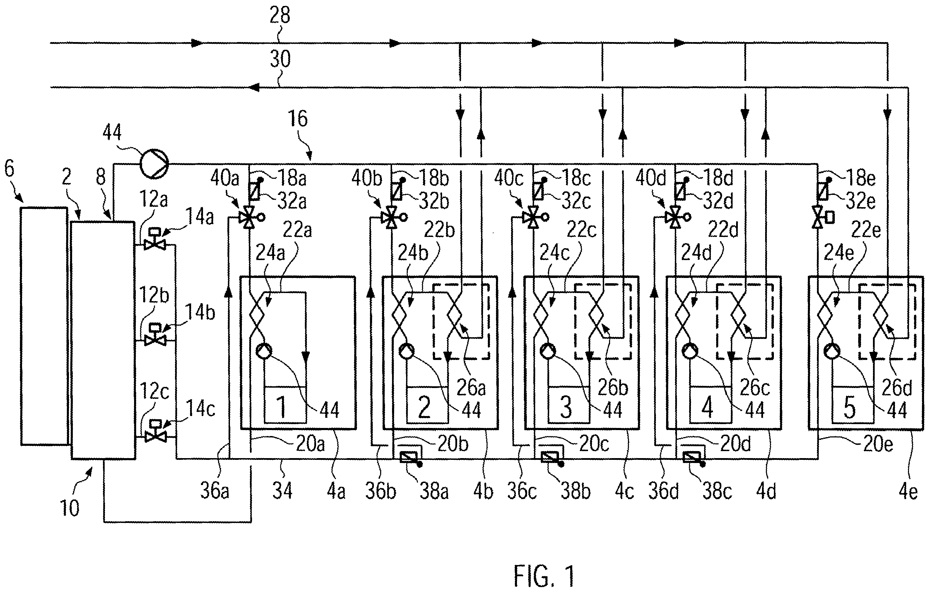

Fig. 1 zeigt schematisch die Verbindung eines Hochdruck-Schichtenspeichers 2 mit mehreren Wärmeverbrauchern 4a, 4b, ..., 4e. Der erste Wärmeverbraucher 4a dient der Erwärmung von Frischwasser. Der zweite Wärmeverbraucher 4b ist die Raumheizung. Der dritte Wärmeverbraucher 4c entspricht dem Brauwassertank. Der vierte Wärmeverbraucher 4d ist der Warmwassertank. Der fünfte Wärmeverbraucher 4e ist die Flaschenreinigungsanlage der Brauerei.

Der Hochdruck-Schichtenspeicher 2 ist mit Sonnenkollektoren 6 gekoppelt, wie es in der WO 2006/100062 A1 ausführlich beschrieben ist. Die Verbindung zwischen dem Schichtenspeicher 2 und den Sonnenkollektoren 6 wird deshalb hier nicht näher erläutert. Es wird lediglich darauf hingewiesen, dass der Schichtenspeicher 2 derart mit den Sonnenkollektoren 6 gekoppelt ist, dass das in dem Schichtenspeicher 2 gespeicherte, unter Hochdruck stehende Wasser auf eine Temperatur von mindestens 120°C, insbesondere von 140°C bis 180°C in der Flüssigphase gespeichert wird.

Der Schichtenspeicher 2 hat einen oberen Auslass 8 und einen unteren Einlass 10. Außerdem weist der Schichtenspeicher 2 drei seitliche Einlassöffnungen 12a, 12b und 12c auf. Vor jeder Einlassöffnung 12a, 12b, 12c ist ein Zweiwegeventil 14a, 14b, 14c vorgesehen.

Die einzelnen Wärmeverbraucher 4a bis 4e sind mit dem Schichtenspeicher 2 über einen schematisch dargestellten Primärkreislauf 16 verbunden.

Die einzelnen Wärmeverbraucher 4a bis 4e sind stromaufwärts über Zuführleitungen 18a bis 18e und stromabwärts davon über Rückführleitungen 20a bis 20e jeweils mit dem Primärkreislauf 16 verbunden.

Jeder Wärmeverbraucher 4a bis 4e weist außerdem einen Sekundärkreislauf 22a bis 22e auf, der über einen Wärmetauscher 24a bis 24e mit dem Primärkreislauf 16 wärmemäßig gekoppelt ist.

Die Sekundärkreisläufe 22b bis 22e sind außerdem jeweils über weitere Wärmetauscher 26a bis 26d mit einer herkömmlichen Dampfleitung 28 sowie einer herkömmlichen Kondensatleitung 30 gekoppelt.

Stromaufwärts von jedem Wärmeverbraucher 4a bis 4e sind jeweils Temperatursensoren beispielsweise im Bereich von Rückschlagklappen 32a bis 32e angeordnet.

Die Rückführleitungen 20b bis 20e münden stromabwärts der jeweiligen Wärmeverbraucher 4a bis 4e in eine Sammelleitung 34, die mit den Einlassöffnungen 12a bis 12c gekoppelt ist. Von der Sammelleitung 34 ist eine Überbrückungsleitung 36d abgezweigt, die in die Zuführleitung 18d des vierten Wärmeverbrauchers 4d mündet. Ein Temperatursensor 38d ist dieser Überbrückungsleitung 36d im Bereich der Abzweigung von der Sammelleitung 34 zugeordnet. Auf ähnliche Art und Weise ist eine Überbrückungsleitung 36b, 36c und ein Temperatursensor 38b, 38c jeweils für den zweiten Wärmeverbraucher 4b und den dritten Wärmeverbraucher 4c vorgesehen. Über diese Sensoren 38a bis 38c wird die Temperatur des Primärkreislaufes 16 im Bereich der Sammelleitung 34 nahe der Übergangsleitungen 36 gemessen. Auch der erste Wärmeverbraucher 4a ist über eine Überbrückungsleitung 36a mit der Sammelleitung 34 gekoppelt.. Die jeweiligen Überbrückungsleitungen 36a bis 36d kommunizieren mit den jeweiligen Zuführleitungen 18a bis 18d über Mischventile 40a bis 40d, die stromabwärts der in den Zuführleitungen 18a bis 18d vorgesehenen Temperatursensoren angeordnet sind. In der Zuführleitung 18e des fünften Wärmeverbrauchers 4e ist ein Zweiwegeventil 42 vorgesehen.

Anders als bei den Wärmeverbrauchern 4b bis 4e, kommuniziert die Rückführleitung 20a des ersten Wärmeverbrauchers 4a nicht mit der Sammelleitung 34, sondern sie kommuniziert direkt mit dem Schichtenspeicher 2 über den unteren Einlass 10.

Sowohl in dem Primärkreislauf 16 als auch in jedem Sekundärkreislauf 22a bis 22e sind Pumpen 44 zum Regeln der Strömungsgeschwindigkeit des in dem jeweiligen Kreislauf 16, 22a bis 22e zirkulierenden Fluids vorgesehen.

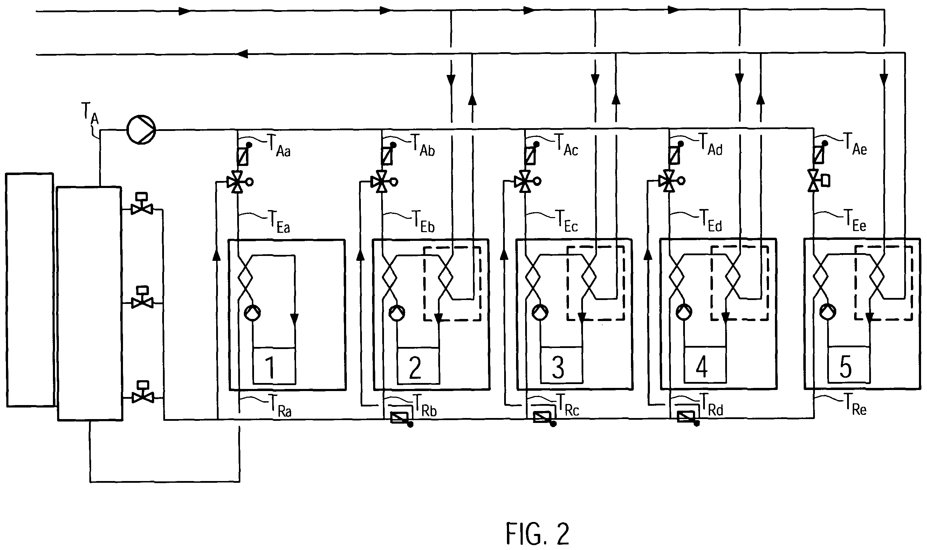

Bevor die Wirkungsweise der in Fig. 1 gezeigten Brauereianlage detailliert beschrieben wird, wird in Bezug auf Fig. 2 die Definition der unterschiedlichen Temperaturzustände beschrieben.

Das in dem Primärkreislauf 16 strömende Heißwasser wird mit einer Ausgangstemperatur T_{A} aus dem Schichtenspeicher 2 entnommen. Die Ausgangstemperatur T_{A} in Bezug zu jedem Wärmeverbraucher 4a bis 4e wird stromaufwärts der Ventile 40a bis 40d, 42 gemessen. Die Temperatur, mit welcher das Wasser den Wärmeaustausch in den jeweiligen Wärmeverbraucher 4a bis 4e bewirkt, wird nachfolgend als die Eintrittstemperatur T_{E} bezeichnet. Die Temperatur, welche das Wasser nach dem Wärmeaustausch aufweist, wird nachfolgend als die Resttemperatur T_{R} bezeichnet. So bezeichnet beispielsweise die Resttemperatur T_{Rb} die Resttemperatur des Wassers stromabwärts des Wärmeverbrauchers 4b nach dem Wärmeaustausch.

Nachfolgend wird das Brauverfahren in Bezug auf Fig. 1 und 2 beschrieben.

Das eine Ausgangstemperatur T_{A} aufweisende Heißwasser wird aus dem Schichtenspeicher 2 über den Primärkreislauf 16 entnommen und den einzelnen Wärmeverbrauchern 4a bis 4e zugeführt, um dort die Abgabe von Wärme zu bewirken. Über die jeweiligen Zuführleitungen 18a bis 18e wird jedem Wärmeverbraucher 4a bis 4e jeweils Heißwasser zugeführt. Das eine Eintrittstemperatur T_{E} aufweisende Wasser führt über den Wärmetauscher 24a bis 24e des Sekundärkreislaufs 22a bis 22e Wärme an den Wärmeverbraucher 4a bis 4e ab. Danach weist das Wasser eine Resttemperatur T_{R} auf und wird abhängig von der Resttemperatur T_{R} entweder direkt zu dem Schichtenspeicher 2 zurückgeführt oder zu einem weiteren Wärmeverbraucher 4a bis 4d zugeführt. Die Steuerung der Rückführung des Wassers wird nachfolgend detailliert in Bezug auf den fünften Wärmeverbraucher 4e beschrieben.

Das Wasser strömt mit einer Eintrittstemperatur T_{Ee} in den Wärmverbraucher 4e ein, und gibt Wärme ab. Nach dem Wärmeaustausch hat das Wasser eine Resttemperatur T_{Re}. Durch die Strömungs-Regelungseinheit der Brauereinlage wird erfasst, ob diese Resttemperatur T_{Re} zur Abgabe von Wärme an einen der stromabwärts angeordneten Wärmeverbrauchern 4a bis 4d geeignet ist. Dazu wird die Resttemperatur T_{Re} über den Temperatursensor 38c erfasst und eine Logik entscheidet, ob das die Resttemperatur T_{Re} aufweisende Wasser über die Überbrückungsleitung 36d dem vierten Wärmeverbraucher 4d zugeführt wird. Falls die Resttemperatur T_{Re} nicht geeignet ist, dort einen Wärmeaustausch energetisch wirkungsvoll zu leisten, wird das Wasser weiter durch die Sammelleitung 34 geführt.

Im Bereich der Überbrückungsleitung 36c wird durch den Temperatursensor 38c erneut die Resttemperatur des Wassers gemessen. Sofern diese erfasste Resttemperatur für den dritten Wärmeverbraucher 4c geeignet ist, wird das Wasser über die Überbrückungsleitung 36c der Zuführleitung 18c dem Wärmeverbraucher 4c zugeführt. Das Wasser strömt demzufolge über die Sammelleitung 34, die Überbrückungsleitung 36c und die Zuführleitung 18c zu dem dritten Wärmeverbraucher 4c. Über das Mischventil 40c kann das eine Resttemperatur aufweisende Wasser mit dem eine Ausgangstemperatur T_{Ac} aufweisenden Wasser vermischt werden, um Wasser mit der erforderlichen Eintrittstemperatur T_{Ec} zu erhalten. Hierdurch wird gewährleistet, dass Wasser mit der erforderlichen Eintrittstemperatur T_{Ec} zur Abgabe von Wärme dem dritten Wärmeverbraucher 4c zuströmt.

Nach Abgabe von Wärme an den dritten Wärmeverbraucher 4c wird das eine Resttemperatur T_{Rc} aufweisende Wasser über die Rückführleitung 20c in die Sammelleitung 34 geführt. Im Bereich der Überbrückungsleitung 36b des zweiten Wärmeverbrauchers 4b wird die Resttemperatur des Wassers über den Temperatursensor 38a erfasst. Die erfasste Wärmetemperatur entspricht nicht notwendigerweise der Resttemperatur T_{Rc}, da sich das eine Resttemperatur T_{Rc} aufweisende Wasser in der Sammelleitung 34 mit dem eine Resttemperatur T_{Rd} und/oder T_{Re} aufweisende Wasser vermischen kann. Sofern das Wasser eine Resttemperatur aufweist, die zum Bewirken von Abgabe von Wärme an dem zweiten Wärmeverbraucher 4b geeignet ist, wird es über die Überbrückungsleitung 36b dem Wärmeverbraucher 36b zugeführt. Auch hier wird durch die Strömungs-Regelungseinheit bestimmt, ob und in welcher Menge das eine Ausgangstemperatur T_{Ab} aufweisende Wasser dem eine Resttemperatur aufweisende Wasser beigemischt werden soll, um die erforderliche Eintrittstemperatur T_{Eb} einzustellen. Dieses Mischverhältnis wird über das Mischventil 40b, falls erforderlich, eingestellt.

Nach Abgabe von Wärme an den zweiten Wärmeverbraucher 4b wird das eine Resttemperatur T_{Rb} aufweisende Wasser zurück in die Sammelleitung 34 geführt. Das Wasser wird dann beispielsweise zurück in den Schichtenspeicher 2 geführt. Insbesondere wird das Wasser abhängig von der Resttemperatur über eine der Einlassöffnungen 12a bis 12c in den Schichtenspeicher 2 eingeströmt. Angenommen, das in den Speicher 2 einzuführende Wasser weist eine Resttemperatur T_{Rb} auf, welche in etwa der Wassertemperatur in dem mittleren Bereich des Schichtenspeichers 2 entspricht, dann wird dieses Wasser über die Einlassöffnung 12b in den Schichtenspeicher 2 eingelassen. Das aus dem ersten Wärmeverbraucher 4a ausströmende Wasser wird stets dem unteren Bereich des Schichtenspeichers 2 über den unteren Einlass 10 zugeführt, da dieses Wasser maximal abgekühlt ist und im unteren Bereich des Schichtenspeichers 2 das Wasser mit der geringsten Temperatur gespeichert ist.

Aus dem obigen folgt, dass die von dem Wasser transportierte Wärmeenergie optimal genutzt wird, bevor es zurück in den Schichtenspeicher 2 geführt wird. Das Wasser wird somit mit geringster Temperatur in den Schichtenspeicher 2 zurückgeführt.

Beim Zuführen des aus dem Schichtenspeicher 2 entnommenen Wassers zu den jeweiligen Wärmeverbrauchern 4a bis 4e sind die Sekundärkreisläufe 22a bis 22e in Bezug auf den Primärkreislauf 16 parallel geschaltet. Das heißt, dass die Wärmeverbraucher 4a bis 4e abhängig von deren jeweiligen Eintrittstemperaturen T_{E} vorgesehen sind.

Durch die Überbrückungsleitungen 36a bis 36d sind die Sekundärkreisläufe 22a bis 22e jedoch auch in Serie schaltbar. Das heißt, das eine Resttemperatur T_{Re} aufweisende Wasser, welches aus dem fünften Wärmeverbraucher 4e ausströmt, kann den stromabwärts liegenden Wärmeverbrauchern 4d, 4c, 4b und 4a über die jeweiligen Überbrückungsleitungen 36d, 36c, 36b und 36a zugeführt werden, wobei die Wärmeverbraucher 4a bis 4e durch die Überbrückungsleitungen 36a bis 36d in diesem Falle in Serie geschaltet sind.

Der Wärmeaustausch zwischen den herkömmlichen Dampf- bzw. Kondensatleitungen 28, 30 mit den jeweiligen Wärmeverbrauchern 4b, 4c, 4d und 4e entspricht dem in der WO 2007/100062 A1 beschriebenen Wärmeaustausch und wird deshalb hier nicht näher beschrieben.

Natürlich können mehr als fünf Wärmeverbraucher an den Primärkreislauf 16 gekoppelt werden. Weitere Beispiele von Wärmeverbrauchern sind in der WO 2006/100062 A1 offenbart.

## Patentansprüche

1. Brauverfahren, welches die Schritte umfasst:
- Entnehmen eines eine Ausgangstemperatur (T_{A}) aufweisenden Fluids aus einem Wärmespeicher (2),
- Zuführen des Fluids zu einem oder mehreren Wärmeverbrauchern (4a, 4b, ..., 4e) zur Abgabe von Wärme, und
- Rückführen des eine Resttemperatur (T_{R}) aufweisenden Fluids zu dem Wärmespeicher (2),
**dadurch gekennzeichnet, dass**
die Resttemperatur (T_{R}) des aus den jeweiligen Wärmeverbrauchern (4a, ..., 4e) ausströmenden Fluids erfasst und die Rückführung des Fluids abhängig von der erfassten Resttemperatur (T_{R}) gesteuert wird, um zu entscheiden, welchen weiteren Weg das von dem jeweiligen Wärmeverbraucher (4a, ..., 4e) strömende Fluid zu gehen hat, so dass abhängig von der erfassten Resttemperatur (T_{R}) des aus dem jeweiligen Wärmeverbraucher (4a, ..., 4e) ausströmenden Fluids dieses wenigstens einem weiteren Wärmeverbraucher (4a,... 4e) und/oder dem Wärmespeicher (2) zugeführt wird.

2. Brauverfahren nach Anspruch 1, **dadurch gekennzeichnet, dass** das Fluid abhängig von der Resttemperatur (T_{R}) in einen vorbestimmten Bereich des Wärmespeichers (2) eingespeist wird.

3. Brauverfahren nach einem der vorherigen Ansprüche, **dadurch gekennzeichnet, dass** das Fluid in einem Primärkreislauf (16) geführt wird und die Wärmeenergie jeweils über Wärmeaustauscher (24a,..., 24e) an einen Sekundärkreislauf (22a,..., 22e) der jeweiligen Wärmeverbraucher (4a,..., 4e) abgegeben wird.

4. Brauverfahren nach Anspruch 3, **dadurch gekennzeichnet, dass** das eine Ausgangstemperatur (T_{A}) aufweisende Fluid nach Abgabe von Wärme an einen vorgelagerten Sekundärkreislauf (22e) stromabwärts dieses Sekundärkreislaufes (22e) zu einem weiteren Sekundärkreislauf (22d) entlang eines von dem Primärkreislauf (16) abzweigenden Überbrückungsweges (36d) geleitet wird.

5. Brauverfahren nach Anspruch 4, **dadurch gekennzeichnet, dass** vor der Abgabe von Wärme an den weiteren Sekundärkreislauf (22d) das eine Resttemperatur (T_{Re}) aufweisende Fluid mit dem eine Ausgangstemperatur (T_{Ad}) aufweisende Fluid abhängig von der Resttemperatur (T_{Re}) und der Ausgangstemperatur (T_{Ad}) vermischt wird

6. Brauverfahren nach Anspruch 4 oder 5, **dadurch gekennzeichnet, dass** dem weiteren Sekundärkreislauf (22d) Fluid mit einer durch Mischen einer von die Resttemperatur (T_{Re}) aufweisenden Fluid mit dem die Ausgangstemperatur (T_{Ad}) aufweisenden Fluid eingestellte Eintrittstemperatur (T_{Ed}) zugeführt wird und dass die Ausgangstemperatur (T_{Ad}) unmittelbar stromaufwärts vor der Mündung des die Resttemperatur (T_{Re}) aufweisenden Fluids bestimmt und die Eintrittstemperatur (T_{Ed}) über das Mischverhältnis in Abhängigkeit von der gemessenen Ausgangstemperatur (T_{Ad}) und der gemessenen Resttemperatur (T_{Re}) eingestellt wird.

7. Brauverfahren nach einem der vorherigen Ansprüche, **dadurch gekennzeichnet, dass** das in dem Wärmespeicher (2) gespeicherte Fluid mittels Solarenergie aufgeheizt wird.

8. Brauereianlage, die umfasst:
- einen ein Fluid aufnehmenden Wärmespeicher (2),
- einen Primärkreislauf (16) des Fluids, der mit dem Wärmespeicher (2) verbunden ist,
- eine Strömungs-Regelungseinheit, die zum Regeln der Strömung des Fluids in der Anlage eingereichtet ist, und
- einen oder mehrere Wärmeverbrauchern (4a,..., 4e), die jeweils mit dem Primärkreislauf (16) zur Abgabe von Wärme verbunden sind,
**dadurch gekennzeichnet, dass**
stromabwärts eines Wärmeverbrauchers (4a,...,4e) wenigstens ein Temperatursensor (38) zum Erfassen der Resttemperatur (T_{R}) des aus dem Wärmeverbraucher (4a,..., 4e) ausströmenden Fluids vorgesehen ist, wobei der Temperatursensor (38) mit der Strömungs-Regelungseinheit derart gekoppelt ist, dass die Fluidströmung abhängig von der erfassten Resttemperatur (T_{R}) regelbar ist, um zu entscheiden, welchen weiteren Weg das von dem jeweiligen Wärmeverbraucher (4a, ..., 4e) strömende Fluid zu gehen hat und abhängig von der erfassten Resttemperatur (T_{R}) des aus dem jeweiligen Wärmeverbraucher (4a, ..., 4e) ausströmenden Fluids dieses wenigstens einem weiteren Wärmeverbraucher (4a, ..., 4e) und/oder dem Wärmespeicher (2) zuzuführen.

9. Brauereianlage nach Anspruch 8, **dadurch gekennzeichnet, dass** jeder Wärmeverbraucher (4a,..., 4e) jeweils einen Sekundärkreislauf (22a,..., 22e) aufweist, der über einen Wärmetauscher (24a,..., 24e) mit dem Primärkreislauf (16) verbunden ist.

10. Brauereianlage nach Anspruch 9, **dadurch gekennzeichnet, dass** der Wärmeverbraucher (4) stromaufwärts mit einer Zuführleitung (18) und stromabwärts mit einer Rückführleitung (20) des Primärkreislaufes (16) verbunden ist und dass stromabwärts eines Wärmeverbrauchers (4) angeordnete Temperatursensoren (38) in einer einen Teil des Primärkreislaufes (16) ausbildenden Sammelleitung (34) vorgesehen sind, wobei jedem stromabwärts angeordneten Temperatursensor (38) eine Überbrückungsleitung (36) derart zugeordnet ist, dass ein Ende der Überbrückungsleitung (36) mit der Sammelleitung (34) und das andere Ende mit der Zuführleitung (18) gekoppelt und ein Mischventil (40) an dem mit der Zuführleitung (18) gekoppelten Enden der Überbrückungsleitung (36) vorgesehen ist.

11. Brauereianlage nach Anspruch 10, **dadurch gekennzeichnet, dass** an die Sammelleitung (34) mehrere Rückführleitungen (20b,...,20e) unterschiedlicher Wärmeverbraucher (4b,..., 4e) angeschlossen sind, und dass diejenige Ruckführleitung (20e), die Fluid mit höherer Resttemperatur (T_{Re}) führt, als eine andere Rückführleitung (20b,...,20d) stromaufwärts der anderen Rückführleitung (20b,...,20d) in die Sammelleitung (34) mündet und zwischen den Mündungen der beiden Rückführleitungen (20d,20e) die Überbrückungsleitung (36d) abgeht, die mit der Zuführleitung (18d) des Wärmeverbrauchers (4d), dessen Rückführleitung (20d) stromabwärts der Überbrückungsleitung (36d) vorgesehen ist, kommuniziert.

12. Brauereianlage nach einem der Ansprüche 9 bis 11, **dadurch gekennzeichnet, dass** die Sekundärkreisläufe (22a...) relativ zu dem Primärkreislauf (16) abhängig von ihren jeweiligen Eintrittstemperaturen (T_{E}) in den Wärmetauscher (24a...) derart vorgesehen sind, dass ein Sekundärkreislauf (22b) mit einer niedrigeren Eintrittstemperatur (T_{Eb}) in den Wärmetauscher (24b) als ein weiterer Sekundärkreislauf (22c) in dem Primärkreislauf (16) stromabwärts dieses weiteren Sekundärkreislaufes (22c) vorgesehen ist.

13. Brauereianlage nach einem der Ansprüche 8 bis 12, **dadurch gekennzeichnet, dass** der Wärmespeicher (2) mehrere jeweils mit dem Primärkreislauf (16) verbundene beabstandete Einlassöffnungen (12a, 12b, 12c) aufweist, die in Zonen unterschiedlicher Temperaturen des Wärmespeichers (2) führen.

14. Brauereianlage nach einem der Ansprüche 8 bis 13, **dadurch gekennzeichnet, dass** die Anlage ferner eine Solarvorrichtung (6) zum Erhitzen des Fluids umfasst.

15. Brauereianlage nach einem der Ansprüche 8 bis 14, **dadurch gekennzeichnet, dass** der Wärmespeicher ein Schichtenspeicher (2), insbesondere ein Hochdruck-Schichtenspeicher ist.

## Claims

1. Brewing process, comprising the steps of:
- taking off a fluid having a starting temperature (T_{A}) from a heat store (2),
- feeding the fluid to one or several heat consumers (4a, 4b, ..., 4e) for releasing heat, and
- returning the fluid having a final temperature (T_{R}) to the heat store (2),
**characterized in that**
the final temperature (T_{R}) of the fluid flowing out of the respective heat consumers (4a, ..., 4e) is detected and the return of the fluid is controlled as a function of the detected final temperature (T_{R}) for making a decision on the further path the fluid flowing from the respective heat consumer (4a, ..., 4e) is to follow such that the fluid is fed to at least one further heat consumer (4a, ..., 4e) and/or to the heat store (2) as a function of the detected final temperature (T_{R}) of said fluid flowing out of the respective heat consumer (4a, ..., 4e).

2. Brewing process according to claim 1, **characterized in that** the fluid is fed to a predetermined region of the heat store (2) as a function of the final temperature (T_{R}).

3. Brewing process according to one of the preceding claims, **characterized in that** the fluid is carried in a primary circuit (16) and the thermal energy is released via heat exchangers (24a, ..., 24e) each to a secondary circuit (22a, ..., 22e) of the respective heat consumers (4a, ..., 4e).

4. Brewing process according to claim 3, **characterized in that** a fluid having a starting temperature (T_{A}) is guided, after it has released heat to a preceding secondary circuit (22e) downstream of this secondary circuit (22e), to a further secondary circuit (22d) along a bridge-over path (36d) branched off from the primary circuit (16).

5. Brewing process according to claim 4, **characterized in that** the fluid having a final temperature (T_{Re}) is mixed with the fluid having a starting temperature (T_{Ad}) before the release of heat to the further secondary circuit (22d) as a function of the final temperature (T_{Re}) and the starting temperature (T_{Ad}).

6. Brewing process according to claim 4 or 5, **characterized in that** fluid having an inlet temperature (T_{Ed}), adjusted by mixing fluid having the final temperature (T_{Re}) with fluid having the starting temperature (T_{Ad}), is fed to the further secondary circuit (22d), and that the starting temperature (T_{Ad}) is determined directly upstream in front of the outlet of the fluid having the final temperature (T_{Re}), and the inlet temperature (T_{Ed}) is adjusted via the mixing ratio as a function of the measured starting temperature (T_{Ad}) and the measured final temperature (T_{Re}).

7. Brewing process according to one of the preceding claims, **characterized in that** the fluid stored in the heat store (2) is heated by means of solar energy.

8. Brewery installation, comprising:
- a heat store (2) receiving a fluid,
- a primary circuit (16) of the fluid connected to the heat store (2),
- a flow controller unit designed to control the flow of the fluid in the installation, and
- one or several heat consumers (4a, ..., 4e) which are each connected to the primary circuit (16) for releasing heat,
**characterized in that**
downstream of a heat consumer (4a, ..., 4e), at least one temperature sensor (38) is provided for detecting the final temperature (T_{R}) of the fluid flowing out of the heat consumer (4a, ..., 4e), wherein the temperature sensor (38) is coupled to the flow controller unit such that the fluid flow can be controlled as a function of the detected final temperature (T_{R}) for making a decision on the further path the fluid flowing from the respective heat consumer (4a, ..., 4e) is to follow and feeding the fluid flowing out of the respective heat consumer (4a, ..., 4e) to at least one further heat consumer (4a, ..., 4e) and/or to the heat store (2) as a function of the detected final temperature (T_{R}) of said fluid.

9. Brewery installation according to claim 8, **characterized in that** each heat consumer (4a, ..., 4e) comprises one secondary circuit (22a, ..., 22e) each which is connected to the primary circuit (16) via a heat exchanger (24a, ..., 24e).

10. Brewery installation according to claim 9, **characterized in that** the heat consumer (4) is connected upstream to a feed pipe (18) and downstream to a return pipe (20) of the primary circuit (16), and that temperature sensors (38) arranged downstream of a heat consumer (4) are provided in a collecting pipe (34) forming a part of the primary circuit (16), where a bridge-over pipe (36) is assigned to each temperature sensor (38) arranged downstream, such that one end of the bridge-over pipe (36) is coupled to the collecting pipe (34), and the other end is coupled to the feed pipe (18), and a mixing valve (40) is provided at the end of the bridge-over pipe (36) coupled to the feed pipe (18).

11. Brewery installation according to claim 10, **characterized in that** several return pipes (20b, ..., 20e) of different heat consumers (4b, ..., 4e) are connected to the collecting pipe (34), and that the return pipe (20e) carrying fluid with a higher final temperature (T_{Re}) than another return pipe (20b, ..., 20d) upstream of the other return pipe (20b, ..., 20d) ends in the collecting pipe (34), and the bridge-over pipe (36d) branches off between the outlets of the two return pipes (20d, 20e), said bridge-over pipe (36d) communicating with the feed pipe (18d) of the heat consumer (4d), of which the return pipe (20d) is provided downstream of the bridge-over pipe (36d).

12. Brewery installation according to one of claims 9 to 11, **characterized in that** the secondary circuits (22a...) are provided relative to the primary circuit (16) as a function of their respective inlet temperatures (T_{E}) into the heat exchanger (24a...) such that a secondary circuit (22b) having a lower inlet temperature (T_{Eb}) into the heat exchanger (24b) than a further secondary circuit (22c) in the primary circuit (16) is provided downstream of this further secondary circuit (22c).

13. Brewery installation according to one of claims 8 to 12, **characterized in that** the heat store (2) comprises several inlet openings (12a, 12b, 12c) which are spaced apart and connected each to the primary circuit (16), and which lead into zones of different temperatures of the heat store (2).

14. Brewery installation according to one of claims 8 to 13, **characterized in that** the installation further comprises a solar device (6) for heating the fluid.

15. Brewery installation according to one of claims 8 to 14, **characterized in that** the heat store is a stratified storage (2), in particular a high pressure stratified storage.

## Revendications

1. Procédé de brassage comprenant les étapes consistant à :
- prélever un fluide présentant une température de sortie (T_{A}) à partir d'un accumulateur de chaleur (2),
- amener du fluide à un ou plusieurs consommateurs de chaleur (4a, 4b,..., 4e) pour délivrer de la chaleur, et
- ramener le fluide présentant une température résiduelle (T_{R}) à l'accumulateur de chaleur (2),
**caractérisé en ce que**
l'on relève la température résiduelle (T_{R}) du fluide, qui s'écoule hors des consommateurs de chaleur (4a,..., 4e) respectifs, et l'on commande le retour du fluide en fonction de la température résiduelle (T_{R}) ayant été relevée, en vue de décider quelle doit être la suite du parcours que doit suivre le fluide s'écoulant hors du consommateur de chaleur (4a,..., 4e) respectif, de sorte qu'en fonction de la température résiduelle (T_{R}) relevée du fluide s'écoulant hors du consommateur de chaleur (4a,..., 4e) respectif, celui-ci est amené à au moins un autre consommateur de chaleur (4a,..., 4e) et/ou à l'accumulateur de chaleur (2).

2. Procédé de brassage selon la revendication 1, **caractérisé en ce que** le fluide est envoyé dans une zone prédéterminée de l'accumulateur de chaleur (2) en fonction de la température résiduelle (T_{R}).

3. Procédé de brassage selon l'une des revendications précédentes, **caractérisé en ce que** le fluide est conduit dans un circuit primaire (16) et l'énergie calorifique est délivrée, respectivement par l'intermédiaire d'échangeurs de chaleur (24a,..., 24e), à un circuit secondaire (22a,..., 22e) des consommateurs de chaleur (4a,..., 4e) respectifs.

4. Procédé de brassage selon la revendication 3, **caractérisé en ce que** le fluide présentant une température de sortie (T_{A}), après avoir délivré de la chaleur à un circuit secondaire (22e) en amont, est conduit, en aval de ce circuit secondaire (22e), vers un autre circuit secondaire (22d) le long d'un parcours de pontage (36d) dérivé du circuit primaire (16).

5. Procédé de brassage selon la revendication 4, **caractérisé en ce qu'**avant la délivrance de chaleur au dit autre circuit secondaire (22d), le fluide présentant une température résiduelle (T_{Re}) est mélangé au fluide présentant une température de sortie (T_{Ad}), en fonction de la température résiduelle (T_{Re}) et de la température de sortie (T_{Ad}).

6. Procédé de brassage selon la revendication 4 ou la revendication 5, **caractérisé en ce que** l' on amène au dit autre circuit secondaire (22d), du fluide avec une température d'entrée (T_{Ed}) réglée par mélange de fluide présentant la température résiduelle (T_{Re}) et de fluide présentant la température de sortie (T_{Ad}), et **en ce que** la température de sortie (T_{Ad}) est déterminée directement en amont de l'embouchure du fluide présentant la température résiduelle (T_{Re}), et la température d'entrée (T_{Ed}) est réglée par l'intermédiaire du rapport de mélange en fonction de la température de sortie (T_{Ad}) mesurée et de la température résiduelle (T_{Re}) mesurée.

7. Procédé de brassage selon l'une des revendications précédentes, **caractérisé en ce que** le fluide stocké dans l'accumulateur de chaleur (2) est chauffé à l'aide d'énergie solaire.

8. Installation de brasserie, qui comprend :
- un accumulateur de chaleur (2) recevant un fluide,
- un circuit primaire (16) du fluide, qui est relié à l'accumulateur de chaleur (2),
- une unité de régulation d'écoulement, qui est conçue pour réguler l'écoulement du fluide dans l'installation, et
- un ou plusieurs consommateurs de chaleur (4a,..., 4e), qui sont reliés chacun respectivement au circuit primaire (16) pour délivrer de la chaleur,
**caractérisée**
**en ce qu'**en aval d'un consommateurs de chaleur (4a,..., 4e), il est prévu au moins un capteur de température (38) pour relever la température résiduelle (T_{R}) du fluide, qui s'écoule hors du consommateur de chaleur (4a,..., 4e), le capteur de température (38) étant couplé à l'unité de régulation d'écoulement de manière à pouvoir réguler l'écoulement de fluide en fonction de la température résiduelle (T_{R}) relevée, en vue de décider quelle doit être la suite du parcours que doit suivre le fluide s'écoulant hors du consommateur de chaleur (4a,..., 4e) respectif, et d'amener celui-ci, en fonction de la température résiduelle (T_{R}) relevée du fluide s'écoulant hors du consommateur de chaleur (4a,..., 4e) respectif, à au moins un autre consommateur de chaleur (4a,..., 4e) et/ou à l'accumulateur de chaleur (2).

9. Installation de brasserie selon la revendication 8, **caractérisée en ce que** chaque consommateur de chaleur (4a,..., 4e) présente respectivement un circuit secondaire (22a,..., 22e), qui est relié au circuit primaire (16) par l'intermédiaire d'un échangeur de chaleur (24a,..., 24e).

10. Installation de brasserie selon la revendication 9, **caractérisée en ce que** le consommateur de chaleur (4) est relié, en amont, à une conduite d'amenée (18) et, en aval, à une conduite de retour (20) du circuit primaire (16), et **en ce que** des capteurs de température (38) agencés en aval d'un consommateur de chaleur (4), sont prévus dans une conduite de collecte (34) formant une partie du circuit primaire (16), une conduite de pontage (36) étant associée à chaque capteur de température (38) agencé en aval, de manière telle qu'une extrémité de la conduite de pontage (36) soit couplée à la conduite de collecte (34) et l'autre extrémité à la conduite d'amenée (18), et une vanne mélangeuse (40) étant prévue à l'extrémité de la conduite de pontage (36), qui est couplée à la conduite d'amenée (18).

11. Installation de brasserie selon la revendication 10, **caractérisée en ce qu'**à la conduite de collecte (34) sont raccordées plusieurs conduites de retour (20b,..., 20e) de différents consommateurs de chaleur (4a, ..., 4e), et **en ce que** la conduite de retour (20e), qui conduit du fluide avec la température résiduelle (T_{Re}) plus élevée qu'une autre conduite de retour (20b,..., 20d), débouche dans la conduite de collecte (34) en amont de ladite autre conduite de retour (20b,..., 20d), et entre les embouchures des deux conduites de retour (20d, 20e) est dérivée la conduite de pontage (36d), qui communique avec la conduite d'amenée (18d) du consommateur de chaleur (4d) dont la conduite de retour (20d) est prévue en aval de la conduite de pontage (36d).

12. Installation de brasserie selon l'une des revendications 9 à 11, **caractérisée en ce que** les circuits secondaires (22a...) sont prévus, par rapport au circuit primaire (16), en fonction de leurs températures d'entrée (T_{E}) respectives dans l'échangeur de chaleur (24a...) de la manière suivante, à savoir qu'un circuit secondaire (22b) avec une température d'entrée (T_{Eb}) dans l'échangeur de chaleur (24b) plus basse qu'un autre circuit secondaire (22c), est prévu dans le circuit primaire (16) en aval de cet autre circuit secondaire (22c).

13. Installation de brasserie selon l'une des revendications 8 à 12, **caractérisée en ce que** l'accumulateur de chaleur (2) présente plusieurs ouvertures d'entrée (12a, 12b, 12c) mutuellement espacées, qui sont reliées chacune respectivement, au circuit primaire (16), et conduisent dans des zones de températures différentes de l'accumulateur de chaleur (2).

14. Installation de brasserie selon l'une des revendications 8 à 13, **caractérisée en ce que** l'installation comprend, par ailleurs, un dispositif à énergie solaire (6) pour chauffer le fluide.

15. Installation de brasserie selon l'une des revendications 8 à 14, **caractérisée en ce que** l'accumulateur de chaleur et un accumulateur à stratification thermique (2), notamment un accumulateur à stratification thermique à haute pression.
